# EUROPÄISCHE PATENTANMELDUNG

(11) **EP 1 415 961 A2**
(43) Veröffentlichungstag der Anmeldung: **06.05.2004**
(21) Anmeldenummer: 03022083.4
(22) Anmeldetag: 02.10.2003
(51) Int. Cl.: C04B 38/00, B28B 1/00, B28B 17/00

(54) **Verfahren zur Herstellung von Bauteilen aus faserverstärkter Verbundkeramik sowie deren Verwendungen**

(30) Priorität: 08.10.2002 DE 10246851
(71) Anmelder: SGL CARBON AG, 65203 Wiesbaden (DE)
(72) Erfinder: Bünis, Rainer, 86453 Dassing (DE); Waliczek, Günther, 86405 Meitingen (DE)

(57) **Zusammenfassung**

Verfahren zur Herstellung von Bauteilen aus hochtemperaturbeständiger faserverstärkter Verbundkeramik aus Kohlenstofffaser-haltigen Bändern (1, 1'), Herstellen einer kraftschlüssigen Verbindung im Bereich der Kontaktzonen (4, 4') durch Erwärmen und gemeinsames Verfestigen unter Druck- und Temperatureinfluss, Carbonisieren des Vorkörpers (10) mindestens einmalige Nachverdichtung des Vorkörpers (10) gefolgt von einer Carbonisierung des so behandelten Vorkörpers (10), dadurch gekennzeichnet, dass die Bänder (1) von den benachbarten Bändern (1') im Bereich (7) außerhalb der Kontaktzonen (4, 4') durch Abstandshalter (3) aus Graphit getrennt werden, und in eine Spannvorrichtung, (5) die im wesentlichen aus Graphit besteht, eingelegt werden, so dass die Bänder (1) und die hieraus gebildeten Vorkörper (10) während der Verarbeitungsschritte fest fixiert sind, und Verwendung von so hergestellten Bauteilen als Werkstückträger, Träger für optische Bauteile sowie in der Luft- und Raumfahrt.

## Beschreibung

Die Erfindung betrifft ein Verfahren zur Herstellung von Bauteilen aus faserverstärkter Verbundkeramik.

Die DE 197 37 212 A1 beschreibt ein Verfahren zur Herstellung eines Werkstückträgers aus hitzebeständigem faserkeramischen Material mit wabenförmiger Struktur für die Wärmebehandlung von Werkstücken. Der Werkstückträger ist einstückig monolithisch ausgebildet oder wird aus einstückig monolithisch ausgebildeten faserverbundkeramischen Einzelelementen, beispielsweise aus CFC (mit Kohlenstofffasern verstärkter Kohlenstoff), und in Bohrungen in diese Elemente eingesteckte und diese zusammenhaltenden stangen-, leisten- oder rohrfömigen faserverbundkeramischen Stützprofilen gebildet. Als "einstückig monolithisch" wird dabei ein Gegenstand bezeichnet, der eine fugenlose Bauweise aufweist. Eine der Verfahrensvarianten sieht vor, mäandrierend abgewinkelte streifenförmige monolithische Teile mit Schrauben gegeneinander zu fixieren. In einer weiteren bevorzugten Verfahrensvariante werden mit Bindemittel getränkte Faserbündel auf polygonale, beispielsweise wabenförmige Kerne aufgewickelt, so dass wabenförmige Hohlprofile entstehen. Danach werden die noch nassen Hohlprofile zusammengefügt, verpresst und ausgehärtet.

Ein hitzebeständiger faserverbundkeramischer Werkstoff ist beispielsweise erhältlich durch Carbonisierung von mit Kohlenstofffasern verstärkten Kunststoffen (CFK), wobei das organische Material wird bei einer Temperaturbehandlung oberhalb ca. 750 °C unter nicht oxidierenden Bedingungen in einen nicht flüchtigen Kohlenstoffrückstand umgewandelt wird, so dass ein mit Kohlenstofffasern verstärkter Kohlenstoff (CFC) erhalten wird. Wegen der Abspaltung der flüchtigen Bestandteile führt dieser Prozess zu einer Materialschwindung, die zum Verzug oder zur Verwerfung des Körpers führt. In der DE 197 37 212 A1 wird keine Lösung des Problems angegeben, Bauteile mit komplexen Strukturen, beispielsweise Wabenstrukturen, verzugsfrei zu carbonisieren.

Aufgabe der Erfindung ist es daher, ein Verfahren aufzuzeigen, das in einfacher Weise aus vielen sich wiederholenden Struktureinheiten aufgebaute Bauteile zugänglich macht, wobei das Verfahren eine verzugsfreie Härtungs- und Hochtemperaturbehandlung, insbesondere Carbonisierung und Graphitierung der Vor- und Zwischenprodukte der Bauteile gewährleisten soll.

Diese Aufgabe wird dadurch gelöst, dass die Bauteile mit sich wiederholenden Struktureinheiten in einer hochtemperaturfesten Spannvorrichtung und unter Zuhilfenahme von Graphitabstandshaltern aus einzelnen Kohlenstofffasern enthaltenden Flächengebilden, insbesondere mit Kohlenstofffasern verstärktem Kunststoff (CFK), oder Faserprepregs mit einem carbonisierbaren Kleber oder dem bei Wärmeeinwirkung erweichenden Bindemittel der Flächengebilde zu einem Vorkörper zusammengeklebt werden. Jedes der Fasergebilde entspricht einer der sich wiederholenden Struktureinheiten. Die Fasergebilde werden entsprechend der gewünschten Struktur an definierten Kontaktzonen zusammengeklebt, während die Abschnitte der Fasergebilde, die die beispielsweise wabenförmigen Öffnungen in der Struktur umschließen, durch die Abstandshalter in der gewünschten Distanz voneinander gehalten werden. Die von den durch die Abstandshalter aus Graphit getrennten Fasergebilden umschlossenen Öffnungen können wabenförmige, dreieckige, viereckige, beispielsweise quadratische oder rechteckige Querschnitte aufweisen.

Dieser Vorkörper wird carbonisiert und mindestens einmal mit einem carbonisierbaren Kohlenstoffprecursor nachverdichtet und carbonisiert, während er in der Spannvorrichtung mit Graphitabstandshaltern fest fixiert bleibt. Durch die Fixierung wird sichergestellt, dass die mit der Carbonisierung einher gehende Schwindung des Vorkörper-Materials nicht zum Verzug oder zu Verwerfungen des CFC-Körpers führt.

Die Erfindung betrifft daher ein Verfahren zur Herstellung von Bauteilen aus hochtemperaturbeständiger faserverstärkter Verbundkeramik, umfassend die Schritte
- Herstellen von gewellten, gebogenen oder mäanderformig gewundenen Bändern aus Kohlenstofffaser-haltigen Flächengebilden,
- Aneinander legen von mindestens zwei der gewellten oder mäanderförmig gewundenen Bändern derart, dass sich zwei benachbarte Bänder mit Teilen ihrer einander zugewandten Oberflächen in Kontaktzonen berühren, wobei die Bänder zumindest im Bereich dieser Kontaktzonen einen Klebstoff oder ein Bindemittel enthalten, das die Fasern verbindet und das bei Wärmeeinwirkung unter Druck verformbar ist,
- Herstellen einer kraftschlüssigen Verbindung zwischen den Bändern im Bereich der Kontaktzonen durch Erwärmen und gemeinsames Verfestigen unter Druckund Temperatureinfluss oder Härten unter Bildung eines so bezeichneten Vorkörpers,
- Carbonisieren des Vorkörpers bei einer Temperatur von 750 bis 1200 °C in einer nicht oxidierenden Atmosphäre,
- mindestens einmalige Nachverdichtung des Vorkörpers durch Infiltration oder Imprägnieren mit einer schmelzbaren oder gasförmigen Substanz, die beim Erhitzen in nicht oxidierender Atmosphäre einen Rückstand von Kohlenstoff bildet ("Kohlenstoff-precursor"), gefolgt von einer Carbonisierung des so behandelten Vorkörpers,
dadurch gekennzeichnet, dass die Bänder von den benachbarten Bändern im Bereich außerhalb der Kontaktzonen zumindest teilweise durch Abstandshalter aus Graphit getrennt werden, und in eine Spannvorrichtung, die im wesentlichen aus Graphit besteht, eingelegt werden, so dass die Bänder und die hieraus gebildeten Vorkörper während der Verfahrensschritte fest fixiert sind.

Die Oxidations- und Verschleißfestigkeit des hierdurch erhältlichen CFC-Bauteils kann gegebenenfalls in einem weiteren Verfahrensschritt durch Graphitierung oder durch Infiltration und anschließende Reaktion mit einem Carbid bildenden Element weiter verbessert werden, wobei dies Element zumindest in die oberflächennahe Außenschicht des Bauteils, bevorzugt in das gesamte Bauteil eindringt und bei der anschließenden Reaktion mit zumindest einem Teil des Kohlenstoffs in der Matrix ein Carbid bildet, derart dass die Matrix nach der Reaktion das gebildete Carbid, das Carbid bildende Element und gegebenenfalls Reste von nicht umgesetztem Kohlenstoff enthält. Besonders bevorzugt ist es, als Carbid bildendes Element Silicium einzusetzen. Die damit durchgeführte Behandlung wird auch als Oberflächen- oder Tiefensilicierung bezeichnet.

Weitere Merkmale, Einzelheiten und Vorteile der Erfindung ergeben sich aus den Figuren und der nachfolgenden Beschreibung.

Dabei zeigen:
Fig. 1: die Herstellung eines gewellten Fasergebildes
Fig. 2: das Aneinanderlegen gewellter Fasergebilde, die teilweise durch Abstandshalter voneinander getrennt werden, nach der ersten Verfahrensvariante
Fig. 3: eine Spannvorrichtung aus Graphit mit durch das Zusammenkleben gewellter Fasergebilde erhaltener Wabenstruktur und Abstandshaltern
Fig. 4: eine durch Zusammenkleben von Fasergebilden erhaltene Wabenstruktur
Fig. 5: ein durch Zusammenkleben von Fasergebilden erhaltenes Bauteil mit quadratischen Öffnungen
Fig. 6: ein durch Zusammenkleben von Fasergebilden erhaltenes Bauteil mit rechteckigen Öffnungen
Fig. 7: ein durch Zusammenkleben von Fasergebilden erhaltenes Bauteil mit abgerundeten Öffnungen
Fig. 8: das Zusammenkleben von formbaren Fasergebilden zu einer Wabenstruktur entsprechend der zweiten Verfahrensvariante

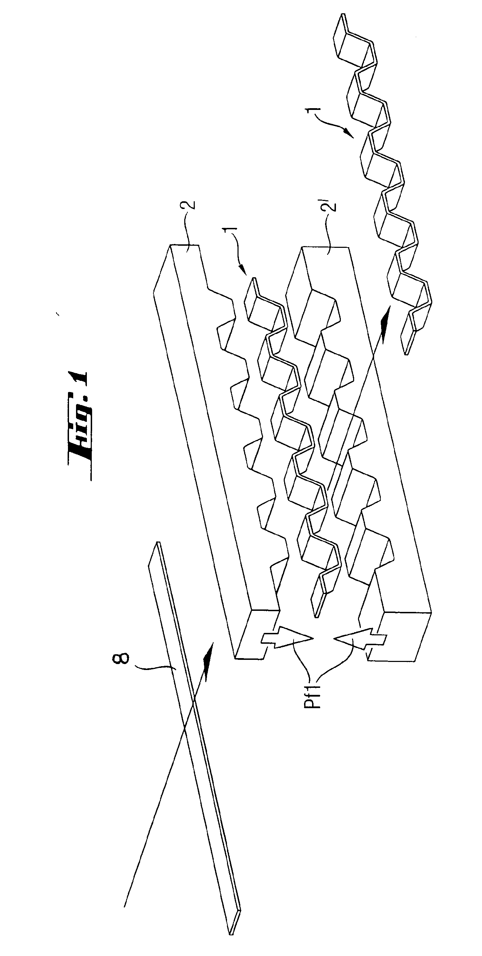

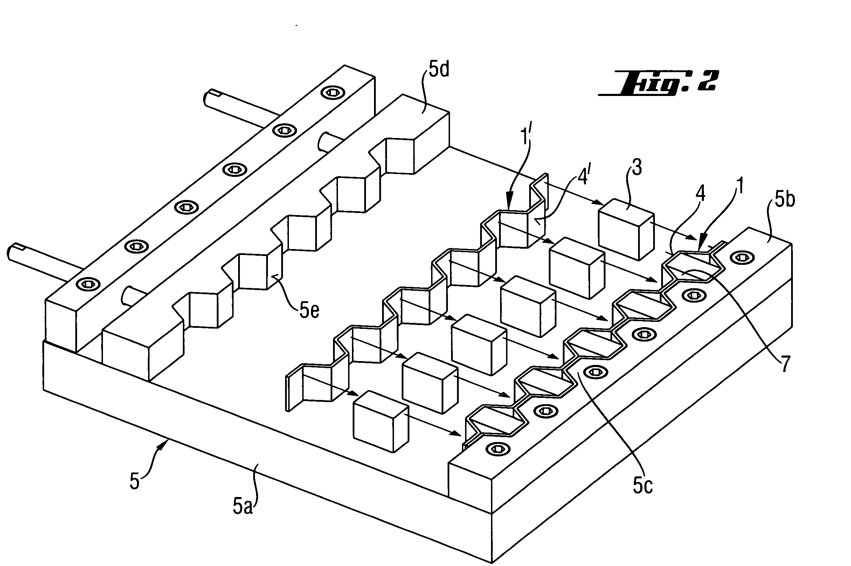

Zur Fertigung des Vorkörpers 10 sieht eine erste Verfahrensvariante vor, gewellte, gebogene oder mäanderförmig gewundene Bänder 1 aus Kohlenstofffasern enthaltenden Flächengebilden 8 durch Prägen (in der Richtung der Pfeile Pf 1) mit Prägestempeln 2, 2' (Fig. 1) oder Plissieren herzustellen, wobei die Bänder bereits ein härtbares Bindemittel enthalten können. Die Bänder 1, 1' entsprechen den sich wiederholenden Struktureinheiten des zu fertigenden Bauteils.
Diese Bänder 1, 1' werden, wie in Figur 2 schematisch gezeigt, unter Verwendung von Abstandshaltern 3 aus Graphit in einer hochtemperaturfesten Spannvorrichtung 5 aus Graphit so aneinandergelegt, dass sich zwei benachbarte Bänder 1, 1' nur teilweise, nämlich in den Kontaktzonen 4, 4', berühren, und mittels eines carbonisierbaren Binders im Bereich dieser Kontaktzonen 4, 4' zusammengeklebt. Außerhalb der Kontaktzonen 4, 4' werden die Bänder 1, 1' durch Abstandshalter 3 aus Graphit in der gewünschten Distanz gehalten.

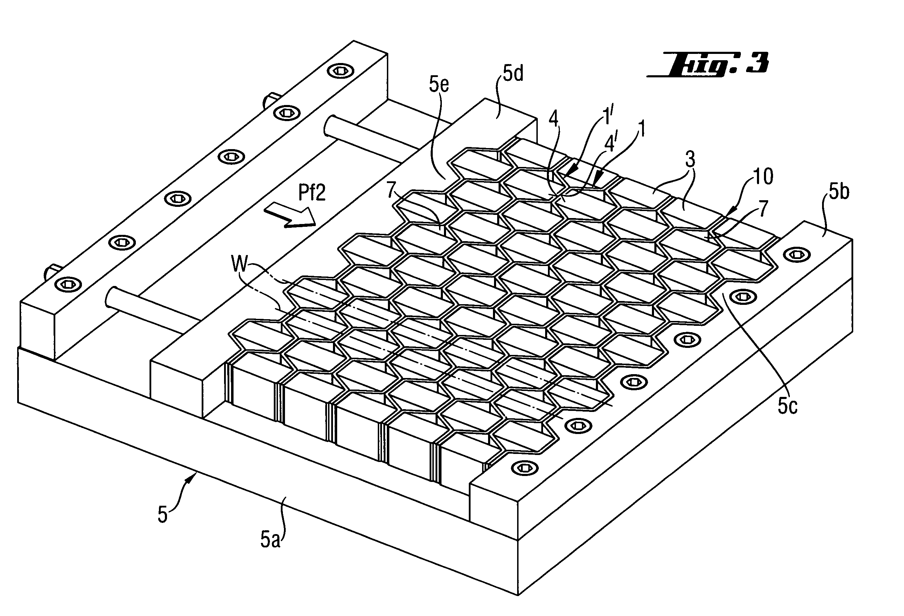

Figur 3 zeigt die Spannvorrichtung 5, in der die gewellten Bänder positioniert und zusammengeklebt werden und der so erhaltene Vorkörper 10 anschließend carbonisiert und gegebenenfalls graphitiert und/oder siliciert wird.
Wie in den Figuren 2 und 3 schematisch angedeutet, besteht die Spannvorrichtung 5 im wesentlichen aus einer Grundplatte oder einem Rahmen 5a, welcher an seinem einen Ende einen feststehenden Gegenhalter 5b mit einer an die Form der Bänder 1 angepassten Profilierung 5c, sowie an seinem gegenüberliegenden Ende einen beweglich gelagerten Pressstempel 5d mit einer ebenfalls an die Form der Bänder 1 angepassten Profilierung 5e aufweist. Die Hohlräume 7, die von den Bändern 1, 1' umschlossen werden sollen, werden mittels der Abstandshalter 3 derart ausgefüllt, dass die Form der Bänder 1, 1' während der weiteren Behandlung stabilisiert wird. Nach Einlegen des letzten Bandes wird mit dem bewegliche Pressstempel 5d ein Pressdruck ausgeübt, so dass die Bänder 1,1" an ihren Kontaktstellen 4,4' zum Vorkörper 10 verbunden werden. Der von dem Pressstempel 5d aufgebrachte Pressdruck (Pfeil P2) wird, wie schematisch durch die Wirklinien W in Figur 3 angedeutet, durchgängig in alle Kontaktflächen 4,4' aufweisenden Bereiche der Bänder 1, 1' eingeleitet, d.h. der Pressdruck wird über eine Serie von Abstandshaltern 3 mit den dazwischen liegenden Kontaktzonen 4, 4' der Bänder 1, 1', in den entsprechend proifilierten Gegenhalter 5b eingeleitet. Die Abstandshalter 3 müssen dabei nicht exakt an den auszubildenden Hohlraum 7 angepasst sein. Entscheidend sind hier nur die Bereiche der Kontaktzonen 4, 4' welche durch intensiven Andruck miteinander verbunden werden sollen.

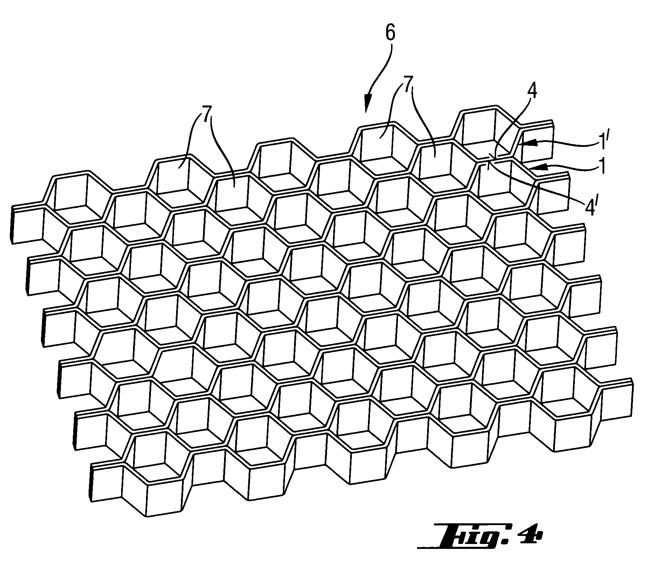

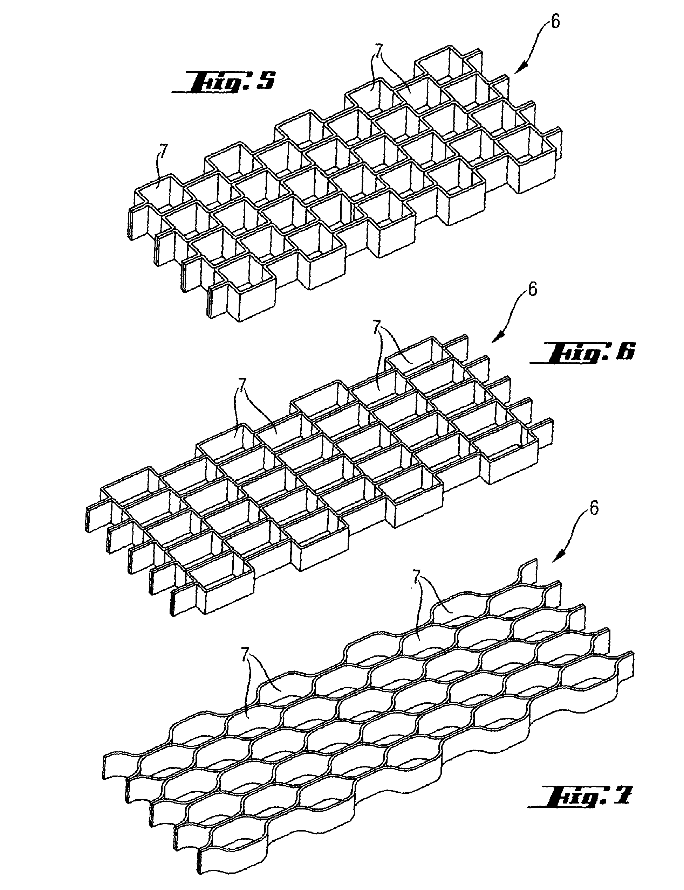

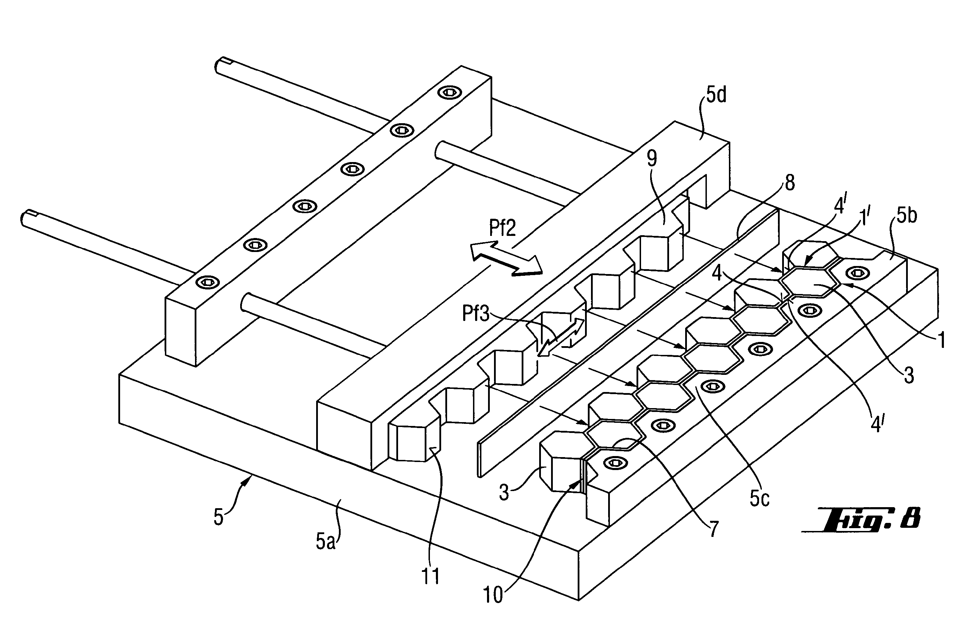

In den Figuren 4 bis 7 sind beispielhaft mit den erfindungsgemäßen Verfahren herstellbare Bauteile 6 dargestellt. Die von den Bändern 1, 1' umschlossenen Öffnungen 7 des Bauteils 6 können wabenförmig sein (Fig. 4), oder viereckige, beispielsweise quadratische (Fig. 5) oder rechteckige (Fig. 6) oder abgerundete (Fig. 7) Formen aufweisen. Da die Bänder vorgeformt sind, müssen die Abstandshalter 3 nicht notwendigerweise dieselbe Form wie die von den Bändern 1, 1' umschlossenen Öffnungen 7 haben. Es genügt, die Abstandshalter 3 so auszubilden, dass sie die Bänder 1, 1' in der gewünschten Distanz voneinander halten.

Das Verfahren umfasst die sich wiederholende Abfolge von Einsetzen neuer Abstandshalter 3 und Ansetzen eines neuen Bandes 1, sowie gegebenenfalls Auftrag eines carbonisierbaren Klebers, falls das neue Band nicht bereits mit Kleber oder Bindemittel ausgestattet ist. Bevorzugt findet die Aushärtung des Klebers nicht nach jedem neu angesetzten Band 1 statt, sondern nach dem Ansetzen des letzten Bands, wenn der Vorkörper 10 bereits seine aus sich wiederholenden Struktureinheiten bestehende Endgestalt hat.

Die Steifigkeit des im Aufbau befindlichen Vorkörpers 10 kann erhöht werden, wenn nach jedem Ansetzen eines neuen Bandes 1 gehärtet wird.

Als carbonisierbare Kleber werden bevorzugt Harze aus der Gruppe der Phenolharze oder der Polyurethane eingesetzt. Zur Härtung können sowohl thermisch oder katalytisch härtende als auch kalt härtende Systeme eingesetzt werden.

Als Kohlenstofffaser-haltige Flächengebilde eignen sich insbesondere mit Kohlenstofffasern verstärkte Kunststoffe (CFK), deren Kunststoffmatrix aus einem carbonisierbaren Material besteht.

Unter carbonisierbaren Materialien sind dabei diejenigen zu verstehen, die bei einer Temperaturbehandlung unter nicht oxidierenden Bedingungen oberhalb von ca. 750 °C einen nicht flüchtigen Kohlenstoffrückstand mit einem Massenanteil von mindestens 25 % Kohlenstoff aufweisen. Als carbonisierbare Kunststoffe werden typischerweise Harze aus der Gruppe der Phenolharze, insbesondere der Resolgruppe, oder Furfurylalkohol-Harze oder Harze aus der Gruppe der Polyurethane eingesetzt.

Bevorzugt bestehen Kleber und Matrix der Kohlenstofffaser-haltigen Flächengebilde aus dem gleichen Polymersystem. Es ist auch möglich und bevorzugt, solche Materialien als Kunststoffmatrix einzusetzen, die bei Wärmeeinwirkung erweichen und die Klebeverbindung im Bereich der Kontaktzonen 4, 4' herstellen können. Dabei ist kein gesonderter Kleberauftrag erforderlich.

Eine zweite Verfahrensvariante sieht vor, dass im Gegensatz zur ersten Variante noch formbare und thermisch härtbare, Kohlenstofffasern enthaltende flächige Fasergebilde 8 eingesetzt werden, die erst in der Spannvorrichtung 5 ihre Endgestalt als Bänder 1, 1' erhalten und auch erst hier ausgehärtet werden. Die in der ersten Variante getrennten Prozesse der Herstellung gewellter, gebogener oder mäanderförmig gewundener Fasergebilde und des Aufbaus der Struktur aus diesen Fasergebilden werden hier in einem gemeinsamen Verfahrensschritt in einer mit einem heizbaren Pressstempel 9 versehenen Spannvorrichtung 5 ausgeführt. Dabei werden die neu hinzutretenden formbaren Fasergebilde 8 mit einem beheizten Pressstempel 9 im Bereich der Kontaktzonen 4 an die Stirnseite des bereits gebildeten Vorkörpers 10 gepresst, der frei liegende Abstandshalter 3 aus Graphit enthält. Die Abstandshalter 3 sind so geformt, dass sie bei der Formgebung des Flächengebildes 8 als Gegenstücke mit dem Pressstempel 9 zusammenwirken. In den Bereichen der Stirnseite des Vorkörpers 10, die nicht Kontaktzonen 4 sind, wird das formbare Fasergebilde durch die Abstandshalter 3 aus Graphit in der gewünschten Distanz zum Vorkörper 10 gehalten (Fig. 8).

Soll eine der in den Figuren 4 bis 7 gezeigten Strukturen hergestellt werden, muss jedes neue bandförmige formbare Fasergebilde 8 spiegelbildlich zu dem vorherigen formbaren Fasergebilde 8 verformt werden. Für eine solche alternierende Formgebung der Fasergebilde 8 zu Bändern 1 ist es nötig, dass der Pressstempel 9 parallel zur Bandebene (Pfeil Pf 3) beweglich ist, so dass die Position der Vorsprünge 11 des Pressstempels 9 nach dem Anpressen eines formbaren Fasergebildes 8 so verändert werden kann, dass das nächste formbaren Fasergebilde 8 die spiegelbildliche Form des vorigen formbaren Fasergebildes erhält.

Zweckmäßigerweise wird hier jedes einzelne neu hinzutretende formbare Fasergebilde 8 zumindest teilweise thermisch gehärtet, da hierdurch sofort eine Verklebung im Bereich der Kontaktzonen 4 des Vorkörpers 10 und eine Versteifung des Vorkörpers 10 erfolgt, die dessen weiteren Aufbau erleichtert. Bei dieser Vorgehensweise ist es von Vorteil, einen beheizbaren Pressstempel 9 und thermisch härtende Kunststoffe oder Binder zu verwenden. Als Kunststoffe oder Binder werden dabei im allgemeinen die gleichen Materialien verwendet, wie sie für die erste Verfahrensvariante beschrieben wurden.

Ebenso ist aber auch eine katalytische Härtung der Kunststoffe oder Binder möglich, wobei jedoch eine genauere Prozessführung erforderlich ist.

Als Kohlenstofffasern enthaltende Flächengebilde für die Herstellung der erfindungsgemäßen Bauteile 6 sind Prepregs, sog. "UD-tapes" (parallel gelegte Endlosfasern in Form von Bändern, die mit Bindern verfestigt sind), Gewebe, Geflechte, Gewirke und Filze geeignet.

Die Verstärkungsfasern der Kohlenstofffaser-haltigen Flächengebilde können uni- oder multidirektional ausgerichtet sein. Durch geeignete Wahl der Faservorzugsrichtungen lassen sich die Bauteile 6 gezielt in bevorzugten Raumrichtungen verstärken.

Eine der bevorzugten Richtungsvarianten sieht vor, überwiegend unidirektional faserverstärkte CFK-Bänder einzusetzen, deren Verstärkungsfasern parallel zur Längsachse der Bänder verlaufen. Ein hierdurch aufgebautes Bauteil eignet sich beispielsweise gut als Träger für schwere Werkstücke, da es eine besonders hohe Steifigkeit senkrecht zur Belastungsrichtung aufweist.

Für eine weitere bevorzugte Richtungsvariante werden Bänder oder formbare Flächengebilde mit bidirektionaler Faserverstärkung eingesetzt. Unter "bidirektional" wird verstanden, dass ein Teil der Fasern nicht parallel zur Längsachse des Bandes orientiert ist, sondern in einem Winkel von 20° bis 160° zur Längsachse des Bandes bzw. des formbaren Flächengebildes ausgerichtet ist. Hierdurch wird eine gleichmäßigere Verstärkungswirkung erreicht, die beispielsweise bei der Verwendung als Stützwand benötigt wird.

Bei bidirektionaler Ausrichtung der Fasern überwiegt bevorzugt der Anteil parallel zur Längsachse orientierter Fasern den Anteil der in andere Raumrichtungen orientierten Fasern.

Ein Vorteil des Verfahrens besteht darin, dass sich in einfacher Weise Bereiche mit unterschiedlicher, gezielt an den Belastungsfall angepasster Faserorientierung einstellen lassen. So können Bänder mit unterschiedlicher Faserorientierung in beliebiger Reihenfolge aneinander gesetzt werden.

Nach der Härtung aller Kunststoffe und Binder, die teils als Kleber, teils als Matrix der Kohlenstofffasern enthaltenden Flächengebilde vorliegen, erfolgt die erste Carbonisierung. Hierdurch werden die leicht flüchtigen Bestandteile abgespalten und eine hochtemperaturfeste Kohlenstoffmatrix ausgebildet. Der hierdurch gebildete Körper wird im folgenden CFC-Körper genannt.

Erfindungsgemäß ist vorgesehen, die Carbonisierung des Vorkörpers 10 im fixierten Zustand zusammen mit Graphitabstandshaltern 3 und Spannvorrichtung 5 vorzunehmen.

Durch die Fixierung wird sichergestellt, dass die mit der Carbonisierung einher gehende Schwindung des Vorkörper-Materials nicht zum Verzug oder zu Verwerfungen des CFC-Körpers führt.

Die Carbonisierung setzt bei Temperaturen oberhalb ca. 750 °C unter nichtoxidierenden Bedingungen ein und wird typischerweise bei Temperaturen im Bereich von 900 bis 1200 °C durchgeführt. Gegebenenfalls kann bereits in oder nach diesem Prozessschritt eine Graphitierung erfolgen, was durch eine Temperaturbehandlung im Bereich von ca. 1800 bis 2400 °C erreicht wird.

Bekanntermaßen wird durch die Graphitierung des Kohlenstoffs die Oxidations- und Verschleißbeständigkeit in vorteilhafter Weise verbessert.

Die nach der ersten Carbonisierung bzw. Graphitierung erhältlichen Verbundwerkstoffe weisen im allgemeinen noch keine für die beabsichtigte Verwendung der Bauteile ausreichende Festigkeit und Werkstoffdichte auf. Es ist daher vorteilhaft, eine oder mehrere Nachverdichtungen mit Kohlenstoff durchzuführen. Dies kann durch Gasphasenabscheidung, oder durch Flüssigphasenimprägnierung mit Kohlenstoffprecursoren gefolgt von einer Carbonisierung erfolgen.

Als Kohlenstoff-precursoren kommen die zur Herstellung von CFC-Werkstoffen üblichen Peche, Polymere oder Harze zum Einsatz.

Erfindungsgemäß wird auch die Nachverdichtung und die nachfolgende Carbonisierung in der Fixiereinrichtung vorgenommen. Obwohl der CFC-Körper bereits nach der ersten Carbonisierung eine gewisse Festigkeit erlangt, hat sich die Fixierung während den folgenden, zumindest der zweiten, Carbonisierung auf die Dimensionsstabilität des Bauteils als sehr vorteilhaft erwiesen. Insbesondere großflächig ausgedehnte Gebilde zeigen ohne Fixierung häufig auch nach mehreren Verdichtungszyklen noch Verzug oder Verwerfungen.

Auch die gegebenenfalls durchzuführende Graphitierung lässt sich ohne Entnahme des CFC-Körpers aus der Fixierung bewerkstelligen.

Ein weiterer Vorteil des Verbleibs von Graphitabstandshaltern 3 und Spannvorrichtung 5 bei den Nachverdichtungs- und Carbonisierungsschritten ist, dass der CFC-Körper vergleichsweise glatte Oberflächen aufweist. Insbesondere bei der Verwendung als Werkstückträger oder Chargiergestell ist dies von Vorteil, da die bei den durchzuführenden Wärmebehandlungen auftretenden Schadstoffe und Verschmutzungen kaum haften bleiben.

Weiterhin lassen sich durch die Abstandshalter 3 zumindest in der zweiten Formgebungsvariante in einfacher Weise Oberflächenprofile, beispielsweise Nuten, Nasen oder Vertiefungen auf die Bänder abformen. Bei den folgenden Nachverdichtungen können diese Oberflächenprofile nicht mit neu abgeschiedenem Kohlenstoffmaterial ausgefüllt oder egalisiert werden, da die Abstandshalter 3 bis zuletzt im CFC-Körper verbleiben. Geeignete Oberflächenprofile können beispielsweise als Fixationspunkte zur Verschraubung oder anderweitigen Befestigung von weiteren Bauteilen Verwendung finden.

Abstandshalter 3 und Spannvorrichtung 5 sind aus hochfeuerfestem Material aufgebaut. Das Material der Kontaktflächen zum Grün- oder CFC-Körper darf darüber hinaus nur eine außerordentlich geringe Haftung zum Kohlenstoff des CFC-Körpers aufweisen. Daher sind zumindest die direkten Kontaktflächen der Abstandshalter 3 und der Spannvorrichtung 5 zum Grün- oder CFC-Körper aus Graphit aufgebaut. Für die nicht in direktem Kontakt mit dem Grün- oder CFC-Körper stehenden Bestandteile der Spannvorrichtung 5 können unter anderem auch CFC-Werkstoffe eingesetzt werden. Bevorzugt sind zumindest die Abstandshalter 3 und/oder die in der zweiten Verfahrensvariante verwendeten Pressstempel 9 vollständig aus Graphit aufgebaut.

Durch Carbonisierung erhältliche CFC-Materialien lassen sich hinsichtlich ihrer Oxidations- und Verschleißbeständigkeit durch Graphitierung und insbesondere Silicierung verbessern.

Daher ist vorgesehen, die CFC-Körper oder Bauteile abschließend zu graphitieren und/oder zu silicieren.

Die Silicierung wird bevorzugt als Flüssigsilicierung mit einer Siliciumschmelze durchgeführt. Dabei wird zumindest in einer oberflächennahen Schicht des Bauteils eine Matrix ausgebildet , die Silicium und Siliciumcarbid enthält. Gegebenenfalls kann auch eine Tiefensilicierung durchgeführt werden, so dass das Bauteil komplett aus einem C/SiC-Werkstoff besteht.

Die Wandstärke der erfindungsgemäß hergestellten Bauteile liegt je nach Verwendungszweck zwischen 0,7 und 30 mm.

Ein weiterer Aspekt der Erfindung betrifft die Verwendungsmöglichkeiten der Bauteile.

Neben der bereits aufgeführten Verwendung als Chargiergestell (Werkstückträger) bei der Durchführung von Wärmebehandlungen an Werkstücken ist insbesondere die Anwendung als thermisch hochbelastbare Bauteile als Skelett- oder Oberflächenteile in der Luft- und Raumfahrt von Bedeutung.

Dabei können die Bauteile insbesondere als Kernelement von Sandwichstrukturen eingesetzt werden.

Aufgrund der geringen und gleichmäßigen thermischen Ausdehnung der erfindungsgemäßen Bauteile zählt auch der Einsatz in Präzisionsmaschinen sowie als Träger für optische Bauteile und Spiegelkonstruktionen, beispielsweise Satellitenspiegel zu den bevorzugten Anwendungen.

### Bezugszeichenliste

- 1, 1': Gewelltes, gebogenes oder mäandrierendes Kohlenstofffasern enthaltendes Band
- 2, 2': Prägestempel
- 3: Abstandshalter aus Graphit
- 4, 4': Kontaktzonen, an denen die Bänder 1 und 1'verbunden werden
- 5: Spannvorrichtung aus Graphit
- 5a: Grundplatte bzw. Rahmen
- 5b: Gegenhalter
- 5c: Profilierung des Gegenhalters
- 5d: Pressstempel
- 5e: Profilierung des Pressstempels
- 6: nach dem erfindungsgemäßen Verfahren hergestelltes Bauteil
- 7: Öffnung in einem nach dem erfindungsgemäßen Verfahren hergestellten Bauteil
- 8: Kohlenstofffaser-haltiges formbares Flächengebilde
- 9: beheizbarer Pressstempel
- 10: Vorkörper
- 11: Vorsprünge des Pressstempels 9

- Pf1: Bewegung der Prägestempels 2, 2'
- Pf2: Presskraft des Pressstempels 5d bzw. 9
- Pf3: Verschiebung des Pressstempels 9

- W: Wirklinie

## Patentansprüche

1. Verfahren zur Herstellung von Bauteilen (6) aus hochtemperaturbeständiger faserverstärkter Verbundkeramik, umfassend die Schritte
- Herstellen von gewellten, gebogenen oder mäanderförmig gewundenen Bändern (1) aus Kohlenstofffaser-haltigen formbaren Flächengebilden (8),
- Aneinanderlegen von mindestens zwei der gewellten oder mäanderförmig gewundenen Bändern (1, 1') derart, dass sich zwei benachbarte Bänder mit Teilen ihrer einander zugewandten Oberflächen in Kontaktzonen (4, 4') berühren, wobei die Bänder zumindest im Bereich dieser Kontaktzonen (4, 4') einen Klebstoff oder ein Bindemittel enthalten, das die Fasern verbindet und das bei Wärmeeinwirkung unter Druck verformbar ist,
- Herstellen einer kraftschlüssigen Verbindung zwischen den Bändern (1, 1') im Bereich der Kontaktzonen (4, 4') durch Erwärmen und gemeinsames Verfestigen unter Druck- und Temperatureinfluss oder Härten unter Bildung eines Vorkörpers (10),
- Carbonisieren des Vorkörpers (10) bei einer Temperatur von 750 bis 1200 °C in einer nichtoxidierenden Atmosphäre,
- mindestens einmalige Nachverdichtung des Vorkörpers (10) durch Infiltration oder Imprägnieren mit einer schmelzbaren oder gasförmigen Substanz, die beim Erhitzen in nichtoxidierender Atmosphäre einen Rückstand von Kohlenstoff bildet, gefolgt von einer Carbonisierung des so behandelten Vorkörpers (10),
**dadurch gekennzeichnet, dass** die Bänder (1) von den benachbarten Bändern (1') im Bereich außerhalb der Kontaktzonen (4, 4') zumindest teilweise durch Abstandshalter (3) aus Graphit getrennt werden, und in eine Spannvorrichtung, die im wesentlichen aus Graphit besteht, eingelegt werden, so dass die Bänder (1) und die hieraus gebildeten Vorkörper (10) während der Verfahrensschritte fest fixiert sind.

2. Verfahren nach Anspruch 1, **dadurch gekennzeichnet, dass** die Bänder (1) ein härtbares Bindemittel enthalten.

3. Verfahren nach Anspruch 1, **dadurch gekennzeichnet, dass** die Formgebung der Bänder (1) in der Spannvorrichtung (5) mittels eines zumindest einseitig profilierten Pressstempels (9) erfolgt, der auf die Kohlenstofffaser-haltigen formbaren Flächengebilde (8) gedrückt wird.

4. Verfahren nach Anspruch 3, **dadurch gekennzeichnet, dass** ein Kohlenstofffaser-haltiges formbares Flächengebilde (8) mit einem zumindest einseitig profilierten Pressstempel auf die Stirnseite eines Vorkörpers (10) gedrückt wird, der zum Teil freiliegende Abstandshalter (3) auf der dem Kohlenstofffaser-haltigen formbaren Flächengebilde (8) zugewandten Seite aufweist, unter Bildung eines entsprechend dem Profil des Pressstempels (9) gewellten Bandes (1).

5. Verfahren nach Anspruch 4, **dadurch gekennzeichnet, dass** das gebildete Band (1) durch thermisches Härten mit dem Vorkörper (10) verbunden wird.

6. Verfahren nach Anspruch 5, **dadurch gekennzeichnet, dass** die zum Härten erforderliche Wärme zumindest teilweise über den Pressstempel (9) eingetragen wird.

7. Verfahren nach Anspruch 3, **dadurch gekennzeichnet, dass** der Pressstempel (9) aus Graphit besteht.

8. Verfahren nach Anspruch 1 oder 3, **dadurch gekennzeichnet, dass** die Kohlenstofffasern zum überwiegenden Anteil parallel zur Längsachse der Bänder (1) oder der Kohlenstofffaser-haltigen formbaren Flächengebilde (8) ausgerichtet sind.

9. Verfahren nach Anspruch 1 oder 3, **dadurch gekennzeichnet, dass** die Kohlenstofffasern teilweise parallel und teilweise in einem Winkel von 20° bis 160° zur Längsachse der Bänder (1) oder der Kohlenstofffaser-haltigen formbaren Flächengebilde (8) ausgerichtet sind.

10. Verfahren nach Anspruch 1, **dadurch gekennzeichnet, dass** als Bindemittel und/oder zum Nachverdichten carbonisierbare Harze verwendet werden.

11. Verfahren nach Anspruch 1, **dadurch gekennzeichnet, dass** nach der letzten Carbonisierung oder Graphitierung eine Schmelzinfiltration mit einem carbidbildenden Element und eine anschließende Reaktion durchgeführt wird, wobei zumindest in der äußeren Schicht des Bauteils eine Matrix ausgebildet wird, die das carbidbildende Element und dessen Carbid enthält.

12. Verfahren nach Anspruch 11, **dadurch gekennzeichnet, dass** als carbidbildendes Element Silicium eingesetzt wird.

13. Verfahren nach Anspruch 11, **dadurch gekennzeichnet, dass** die Schmelzinfiltration und anschließende Reaktion so durchgeführt wird, dass die gesamte Matrix des Bauteils das carbidbildende Element und dessen Carbid enthält.

14. Verwendung von Bauteilen hergestellt nach einem der Ansprüche 1, 11 und 13 als Chargiergestell bei der Hochtemperaturbehandlung von Werkstücken.

15. Verwendung von Bauteilen hergestellt nach einem der Ansprüche 1, 11 und 13 als Skelett- oder Oberflächenteil in Luft- oder Raum-Fahrzeugen.

16. Verwendung von Bauteilen hergestellt nach einem der Ansprüche 1, 11 und 13 als Träger für optische Bauteile.

17. Verwendung von Bauteilen hergestellt nach einem der Ansprüche 1, 11 und 13 zum Bau von Präzisionsmaschinen.
